# EUROPEAN PATENT SPECIFICATION

(11) **EP 0 391 646 B1**
(45) Date of publication and mention of the grant of the patent: **15.06.1994**
(21) Application number: 90303514.5
(22) Date of filing: 02.04.1990
(51) Int. Cl.: D01F 6/60, D21H 13/26

(54) **A process for the preparation of a poly(paraphenylene terephthalamide) fibrous gel composition and a process to produce poly (Paraphenylene terephthalamide) paper from the composition**
Verfahren zur Herstellung von Poly(paraphenylenterephthalamid) enthaltenden Zusammensetzungen in der Form eines faserigen Gels und Verfahren zur Erzeugung von aus dieser Zusammensetzung hergestelltem Papier
Procédé de préparation de composition de gel fibreux à base de poly(paraphénylène téréphtalamide) et procédé de production de papier à base de poly(paraphénylène téréphtalamide) à partir de cette composition

(30) Priority: 03.04.1989 US 332792
(43) Date of publication of application: 10.10.1990
(73) Proprietor: E.I. DU PONT DE NEMOURS AND COMPANY, Wilmington Delaware 19898 (US)
(72) Inventor: Sweeny, Wilfred, Wilmington, Delaware 19809 (US)
(74) Representative: Jones, Alan John

(56) References cited:
- US-A- 3 819 587
- US-A- 4 011 203
- US-A- 4 511 623

## Description

### Background of the Invention

### Field of the Invention

This invention relates to a process for preparing a poly(paraphenylene terephthalamide) fibrous gel composition comprising an amide solvent, an alkaline earth metal salt and N-methylpyrrolidine or its hydrochloride and a process to prepare wholly poly(paraphenylene terephthalamide) papers using the composition as a binder.

### Description of the Prior Art

The preparation of poly(paraphenylene terephthalamide) such as taught by U.S. 3,869,429 issued to Blades is generally described by reacting terephthaloyl chloride with para-phenylenediamine in a stirred solution of an alkaline earth metal salt and an amide solvent such as N-methylpyrrolidone. The result is a dry, crumb-like product devoid of fiber structure and too coarse for fiber or paper uses. To make fibers, the polymer component must be isolated from the reaction product by, for example, washing and drying, then dissolving the polymer in an appropriate solvent such as sulfuric acid and spinning the solution through an air gap into a coagulation bath.

Poly(paraphenylene terephthalamide) pulp is generally prepared from such spun filaments which are washed and dried before mechanical abrasion into pulp. It is also generally necessary to use specialized fiber cutting equipment to cut the spun continuous filaments into uniform short lengths before abrasion into pulp.

Obtaining poly(paraphenylene terephthalamide) polymers useful as a pulp directly from the polymerization system without first spinning a fiber is disclosed in EP-A-0 348 996. Briefly, that process for producing para-aramid pulp includes forming an actively polymerizing solution containing para-aramid polymer chains by contacting an aromatic diacid halide and an aromatic diamine in a solvent and subjecting the solution to orienting flow. When the solution has a viscosity sufficient to maintain the orientation of the polymer chains, the solution is incubated until it gels. The gel is cut and the pulp is isolated from the gel.

The use of an acid acceptor in a polymerization system is known. As examples, United States Patents 4,011,203 issued March 8, 1977 and 4,072,664 issued on February 7, 1978 disclose processes to prepare copolymers of two aromatic polyamides optionally using an acid acceptor as a polymerizing additive. Suitable acid acceptors for polymerizing the aromatic polyamides produced from one of piperazine, p-phenylene diamine, terephthaloyl halide or N,N'-bis(p-aminobenzoyl) ethylene diamine may include N-methylpyrrolidine and N-methylmorpholine present in an amount of not more than 10% by volume based on the volume of the solvent in the polymerization system. In particular US-A-4011203 discloses polycondensing piperazine and p-phenylene diamine with an equimolar amount of terephthaloyl dihalide in an amine type polar solvent (eg N-methyl-2-pyrrolidone), the piperazine being contained in a ratio of 10 to 35% by mol based on the mixed diamine component to produce aromatic polyamides which can be used to make fibres.

Aromatic tertiary amines, such as pyridine are disclosed in references teaching the preparation of aromatic polyamides. For example, Japanese Patent Application 52-124099 published October 18, 1977 discloses a method of preparing aromatic polyamides using as polymerizing additives only aromatic tertiary amines. United States Patent Number 4,511,623 issued April 16, 1985 discloses poly(paraphenylene terephthalamide) short fibers directly prepared during polymerization of the components of the polymer. Only heterocyclic aromatic tertiary amines such as pyridine, are taught as suitable additives to achieve the desired chain growth. Similarly, United States Patent Number 4,579,895 issued April 1, 1986 to Cuidard, et al. discloses a process to prepare poly(paraphenylene terephthalamide) using tertiary amines with a pKa equal to, at most, 6.60 such as pyridine. Cuidard et al. discloses that the use of an amine with a higher pKa forms a sparingly soluble complex between the tertiary amine and the terephthaloyl chloride, totally or partially preventing the terephthaloyl chloride from reacting with the para-phenylenediamine.

### Summary of the Invention

There is provided by this invention, a process for preparing a poly(paraphenylene terephthalamide) fibrous gel composition comprising the steps of placing substantially stoichiometric amounts of terephthaloyl chloride in reactive contact with para-phenylenediamine in a solution, under agitation, of: (a) at least one amide solvent, preferably N-methylpyrrolidone, in an amount sufficient to produce a final concentration of poly(paraphenylene terephthalamide) in the range from about 3 to about 7 percent by weight of the solvent; (b) at least 1.5 moles of an alkaline earth metal salt per mole of para-phenylenediamine, preferably calcium chloride; (c) and N-methylpyrrolidine present in the range from 1.0 to 2.0 moles per mole of para-phenylenediamine and preferably 1.5 to 1.8 moles per mole of para-phenylenediamine or N-methylpyrrolidine hydrochloride present in the range from 1.5 to 4.0 moles per mole of para-phenylenediamine.

Papers of wholly poly(paraphenylene terephthalamide) are produced by combining, under agitation to yield a slurry, the poly(paraphenylene terephthalamide) fibrous gel composition of this invention; poly(paraphenylene terephthalamide) fiber; and a liquid precipitating medium. The slurry is poured onto a screen to form a sheet, which is washed, pressed and dried.

Surprisingly, it has now been found, by the process of this invention, that the addition of the aliphatic heterocyclic tertiary amine, N-methylpyrrolidine (pKa 10.46) or its hydrochloride to the polymerizing mixture of para-phenylenediamine and terephthaloyl chloride results in a poly(paraphenylene terephthalamide) fibrous gel composition useful in the preparation of poly(paraphenylene terephthalamide) fiber, pulp and binder fiber.

### Detailed Description of the Invention

In accordance with this invention, the poly(paraphenylene terephthalamide) fibrous gel composition is prepared by placing substantially stoichiometric amounts of terephthaloyl chloride in reactive contact with para-phenylenediamine in a solution under agitation of at least one amide solvent, an alkaline earth metal salt and N-methylpyrrolidine or N-methylpyrrolidine hydrochloride.

Quantities of terephthaloyl chloride and para-phenylenediamine are employed which result in a final concentration of poly(paraphenylene terephthalamide) in the range from 3 to 7% by weight of the amide solvent. Polymer concentrations in excess of 11% by weight of the amide solvent result in the formation of a dry crumb-like product without the fibrous structure necessary for pulp-type uses.

The para-phenylenediamine and the terephthaloyl chloride are reacted in an amide solvent system similar to that disclosed in Kwolek, et al., U.S. 3,063,966. Suitable amide solvents, or mixtures of such solvents, include N-methylpyrrolidone, tetramethylurea, N,N-dimethylacetamide. In the preferred form of this invention, N-methylpyrrolidone is the amide solvent.

The presence of at least 1.5 moles of an anhydrous alkaline earth metal salt per mole of para-phenylenediamine in the polymerization system is critical for the preparation of the fibrous gel composition of this invention. Salts which can be used include calcium chloride, lithium chloride and the like. Calcium chloride is conveniently the preferred salt. Without the salt, only a low molecular weight crumb-like product is produced.

In accordance with the invention, the aliphatic heterocyclic tertiary amine, N-methylpyrrolidine or N-methylpyrrolidine hydrochloride, is added to the polymerization mixture of N-methylpyrrolidone, alkaline earth metal salt and para-phenylenediamine and results in the formation of the poly(paraphenylene terephthalamide) fibrous gel composition of this invention on the addition of the terephthaloyl chloride. The N-methylpyrrolidine must be present in the range from 1.0 to 2.0 moles per mole of para-phenylenediamine to achieve the desired fibrous gel composition. The preferred amount of N-methylpyrrolidine is 1.5 to 1.8 moles per mole of para-phenylenediamine. The N-methylpyrrolidine hydrochloride may be used in place of the N-methylpyrrolidine to yield the fibrous gel composition of this invention. N-methylpyrrolidine hydrochloride can be added in the range from 1.5 to 4.0 moles per mole of para-phenylenediamine. Amounts of N-methylpyrrolidine or its hydrochloride added to the system below 1.0, or 1.5 if the hydrochloride is used, yield a reaction product that is crumb-like and similar to the reaction product made in the absence of N-methylpyrrolidine. Amounts of N-methylpyrrolidine added to the system beyond 2.0 moles per mole of para-phenylenediamine limits the molecular weight of the polymer and results in a product with limited utility.

The typical fibrous gel composition of this invention contains fibers of poly(paraphenylene terephthalamide) with lengths in the range of 20 to 500 microns. The inherent viscosity of the polymer isolated from the composition is about 4 to about 6, or higher. The composition is gel-like and non-pourable. When stored as long as two years, the polymer inherent viscosity remains in the same range as the inherent viscosity of freshly isolated polymer. In addition, the composition shows substantially no change on storage for periods up to 2 years, shows no tendency to become brittle or to crumb and retains its utility as a source of fiber, pulp or binder fiber.

Once the fibrous gel composition is obtained, the fibers contained therein can be isolated by further dispersing the composition by dilution in a vigorously stirred precipitating medium comprising a non-solvent for the polymer. The precipitating medium is conveniently water, but can include a variety of polar liquids such as alcohols, amines, amides, N-methylpyrrolidone and mixtures thereof. The fibers produced by the process in accordance with the invention are short fibrillated pulp fibers of poly(paraphenylene terephthalamide). The length of the fibers isolated from the composition of this invention are about 400 to 1000 microns. Since the method does not involve spinning from a sulfuric acid solution, the fibers are free of sulfonic acid groups. The fibers that are isolated from the gel-like composition of this invention can be employed in typical poly(paraphenylene terephthalamide) pulp-type end-use applications such as friction products and gaskets.

The fibrous gel composition can also be used directly as a binder in paper. A wholly poly(paraphenylene terephthalamide) paper can be conveniently prepared by diluting the composition with an amide solvent, preferably N-methylpyrrolidone; and then mixing the diluted gel composition with a slurry of poly(paraphenylene terephthalamide) fiber in water or another suitable precipitation medium. Suitable poly(paraphenylene terephthalamide) fibers for use with the composition are fibers of 0.25 inch (0.64 cm) or less, "floc", such as sold by the E.I. du Pont de Nemours and Co., Wilmington, Delaware under the trade designation "Kevlar" T-679. The mixture is then filtered to form a sheet structure which is washed, pressed and dried to form a paper sheet.

Longer fibers have been produced from the fibrous gel composition of this invention by press extruding the composition at 90°C through a spinneret into a water quench. Fibers of up to 12 inches (30.5 cm) in length were obtained. Tensile properties where T/E/Mi (gpd/%/gpd)=1.4/8/15 as dried and 1.9/5/43 after heating to 250°C.

In the following Examples, as well as in other passages of this specification, parts and percentages are by weight unless otherwise indicated. The Examples which follow illustrate the invention employing the following test methods:

### Test Methods

### Inherent Viscosity

Inherent viscosity (IV) is defined by the equation:$\text{IV = ln(ηrel)/c}$
where c is the concentration (0.5 gram of polymer in 100 ml of solvent) of the polymer solution and η rel (relative viscosity) is the ratio between the flow times of the polymer solution and the solvent as measured at 30°C in a capillary viscometer. The inherent viscosity values reported and specified herein are determined using concentrated sulfuric acid (96% H₂ SO₄).

### Length Measurements

The fiber lengths are measured directly from optical microscopic photographs, corrected for the magnification.

### Sheet Measurements

The characteristics referred to herein for the sheet in Example 4 are measured by the following methods. In the description of the methods, ASTM refers to the American Society of Testing Materials and TAPPI refers to the Technical Association of Paper and Pulp Industry. The Burst test is based on TAPPI-403 and uses a 2x2.5 inch (5.1 x 6.4 cm) sample. Aluminum foil is used as the burst control.

Tongue tear is measured by ASTM method D 2261 and is based on using a 2.0 x 2.5 inch (5.1 x 6.4 cm) sample. A one inch (2.5 cm) slit is cut lengthwise in each specimen. Nominal gauge length is set at one inch and a crosshead speed of 2.0 inch (5.1 cm) per minute is used.

Strip tensile strength, modulus strain and toughness are calculated from ASTM D-828 and were run using a 0.5x2 inch (1.3x5.1 cm) gauge length sample.

### Description of the Preferred Embodiments

### EXAMPLE 1

This example describes the preparation of a 6% composition of poly(paraphenylene terephthalamide) by weight of N-methylpyrrolidone solvent with 2.8 moles of calcium chloride per mole of para-phenylenediamine and 1.46 moles of N-methylpyrrolidine per mole of para-phenylenediamine.

A resin kettle equipped with a basket stirrer, a nitrogen inlet, and an outlet to which drying tubes were attached, was flamed under a stream of nitrogen to remove adsorbed moisture. 15.6 (0.14 moles) grams of anhydrous calcium chloride dried at 400°C was added to 200 grams of dried distilled N-methylpyrrolidone in the dried kettle. The mixture was stirred and heated to approximately 100°C until the calcium chloride was substantially dissolved. The solution was then cooled with an external ice bath and 5.4 grams (0.05 moles) para-phenylenediamine was added and stirred until dissolved. 6.2 grams (0.073 moles) N-methylpyrrolidine was added and the mixture was stirred for several seconds. 10.2 grams(0.05 moles) powdered terephthaloyl chloride was added at once, and rinsed in with 20cc of N-methylpyrrolidone. Immediately, the mixture was rapidly stirred. The cooling bath was removed after about one minute. The stirring was continued for an hour and a half. The solution changed to a thick fibrous gel composition and remained that way throughout the reaction. A sample of the gel was removed at the end of the reaction, and after diluting 5x times with N-methylpyrrolidone, was examined under a polarizing microscope and showed clumps of fibers and individual fibers about 60 microns in length. A sample of the gel was thoroughly extracted with water in a blender, filtered and then dried yielding a fibrous pulpy material. The inherent viscosity of a 0.5% solution in 98% sulfuric acid at 30°C was 5.03 dl/g.

### EXAMPLE 2

This example was carried out as in Example 1 except that 7.5g (0.088 mole (1.76 moles per mole of para-phenylenediamine)) of N-methylpyrrolidine was used. A thick fibrous gel composition also resulted. A sample of the gel diluted 5x with N-methylpyrrolidone and examined under a polarizing microscope showed clumps of fibers some of which individually exceeded 500 microns in length. Most of the fibers however were 20-60 microns in length. Inherent viscosity of fibrous pulpy material isolated from the gel composition was 4.4 at 0.5% concentration in 98% sulfuric acid.

### EXAMPLE 3

Example 1 was repeated except that the N-methylpyrrolidine was replaced by 24g of N-methylpyrrolidine hydrochloride (3.9 moles per mole of para-phenylenediamine). Polymerization took place rapidly as evidenced by increase in viscosity. The polymer remained in solution through 30 minutes giving a very viscous golden solution. At 39 minutes the solution became a thick gel that balled up on the stirrer. Polymerization was continued for 1.5 hours. The product was then a thick gel, like that seen in Example 1. Examination under the optical microscope showed the gel to contain an oriented fibrous structure. Dilution of the gel 5x with N-methylpyrrolidone and examination under the optical microscope at 100x magnification revealed a fiber and film structure exceeding 500 microns in length. On aqueous work-up, a very fibrous pulpy material was obtained.

### EXAMPLE A

For a control, Example 1 was repeated except that no N-methylpyrrolidine was added. The polymer solution did not remain as a gel but broke up into a damp sawdust-like crumb after stirring for 13 minutes. Stirring however was continued for a total reaction time of 90 minutes. A sample of the polymer mixture was diluted 5x with N-methylpyrrolidone and examined under a polarizing microscope. This showed the polymer as chunks and not as discrete fibers. Inherent viscosity at 0.5% concentration in 98% sulfuric acid was 4.48.

### EXAMPLE B

As a comparison, Example 1 was repeated except 14.2g(0.16moles (3.2 moles per mole of para-phenylenediamine)) N-methylpyrrolidine was used. The resultant product was slightly viscous and when precipitated into water in a blender, a powdery, chunky polymer resulted. The inherent viscosity of the isolated polymer was 0.74.

### EXAMPLE C

As a comparison, Example 1 was repeated except that the N-methylpyrrolidine was replaced with 6.9g (0.087 moles (1.74 moles per mole of para-phenylenediamine)) of pyridine. A gel structure resulted. A sample of the gel was diluted 5x with N-methylpyrrolidone and on examination under a polarizing microscope showed small clumps of fibers which individually were in the 100 micron range. Polymer inherent viscosity at 0.5% concentration in 98% sulfuric acid was 4.7.

### EXAMPLE D

As a comparison, Example 1 was repeated except that the N-methylpyrrolidine was replaced with 7.6g (0.075 mole (1.5 moles per mole of para-phenylenediamine)) triethylamine. the product was a soft yellow semi-dry gel that solidified after standing overnight. A sample of the product was diluted 5x with N-methylpyrrolidone and on examination under a polarizing microscope showed discrete tiny particles generally less than 15 microns in length. These particles showed little tendency to agglomerate or entangle, as required for paper or binder uses. The polymer inherent viscosity was 3.4.

### EXAMPLE E

As a comparison, Example 2 was repeated except that the N-methylpyrrolidine was replaced with 8.8g (0.087 moles (1.74 moles per mole of para-phenylenediamine) N-methylmorpholine. Polymerization was rapid on addition of the acid chloride and a dry crumb formed after about 3 minutes. Polymerization was continued for 90 minutes. The dry crumb was examined under a polarizing microscope after dilution 5x with N-methylpyrrolidone and showed polymer chunks interdispersed with small fibers. The inherent viscosity of the isolated polymer was 6.2.

### EXAMPLE F

As a comparison, Example 1 was repeated except that the polymer solution concentration was increased 2x i.e. 7.8g calcium chloride and 100g N-methylpyrrolidone were used instead of 15.6 and 200 g, respectively. A viscous solution formed immediately on addition of the acid chloride and a dry crumb formed after about 1 minute. The final product, after water extraction, was a non-fibrous powder. Inherent viscosity at 0.5% in 98% sulfuric acid was 3.6.

### EXAMPLE G

As a comparison, Example F was repeated except that 200 g of N-methylpyrrolidone was used. The polymer again precipitated as a crumb. The inherent viscosity of the product was 4.48.

### EXAMPLE 4

The fibrous gel composition made using N-methylpyrrolidine in the polymerization reaction as described in Example 1 was used as a binder to make a paper with poly(paraphenylene terephthalamide) fibers of 0.25 inch (0.6 cm) or less (hereinafter "floc") sold by the E.I. du Pont de Nemours and Co., Wilmington, Delaware under the trade designation "Kevlar" T-679. 40g of the gel composition was diluted in a Waring Blendor with 150cc of N-methylpyrrolidone. This yielded a diluted gel. In a separate vessel, 10g of 0.25 inch (0.6 cm) floc was slurried by hand in 500 cc water to get uniform dispersion. This was then added to the diluted gel and stirred rapidly for 5 minutes in the blender and filtered through a 12x12 inch (30.5 x 30.5 cm) hand sheet mold using 100 mesh screen. The sheet was washed several times with water. The poly(paraphenylene terephthalamide) paper sheet was removed from the screen without breakage and dried at 100°C under a canvas screen at low pressure. The sheet contained 16-17% binder fiber from the fibrous gel composition. Measured properties on the sheet were: Burst: 1.38psi/oz/sq.yd. (0.4 kPa/g/m²); Tongue Tear: 0.38 g./g./sq. meter,; Strip Tensile strength 0.34 lb/in/oz/sq.yd. (0.39 kPa/cm/g/m²), Modulus 14.2 lb/in/oz/sq.yd. (1.63 kPa/cm/g/m²) Strain 4.9%, Toughness 0.012lb/oz/sq.yd (0.003 kPa/g/m²). A paper made in the same way from floc without binder had no integrity and negligible useful properties.

## Claims

1. A process for preparing a poly(paraphenylene terephthalamide) fibrous gel composition comprising the steps of placing substantially stoichiometric amounts of terephthaloyl chloride in reactive contact with paraphenylene diamine in a solution, under agitation of:
(a) at least one amide solvent in an amount sufficient to yield a final concentration of poly(paraphenylene terephthalamide) in the range from 3 to 7 percent by weight of the solvent;
(b) at least 1.5 moles of an alkaline earth metal salt per mole of para-phenylenediamine;
(c) and N-methylpyrrolidine present in the range of from 1.0 to 2.0 moles per mole of para-phenylenediamine ;
said process being carried out in the absence of piperazine.

2. The process of claim 1 wherein the molar ratio of N-methylpyrrolidine is 1.5 to 1.8 moles per mole of para-phenylenediamine.

3. The process of claim 1 or Claim 2 wherein the amide solvent is N-methylpyrrolidone.

4. The process of claim 1, 2 or 3 wherein the alkaline earth metal salt is calcium chloride.

5. A process for preparing a poly(paraphenylene terephthalamide) fibrous gel composition comprising the steps of placing substantially stoichiometric amounts of terephthaloyl chloride in reactive contact with paraphenylene diamine in a solution, under agitation of:
(a) at least one amide solvent in an amount sufficient to yield a final concentration of poly(paraphenylene terephthalamide) in the range from about 3 to about 7 percent by weight of the solvent;
(b) at least 1.5 moles of an alkaline earth metal salt per mole of para-phenylenediamine;
(c) and N-methylpyrrolidine hydrochloride present in the range of from 1.5 to 4.0 moles per mole of para-phenylenediamine ;
said process being carried out in the absence of piperazine.

6. The process of claim 5 wherein the amide solvent is N-methylpyrrolidone

7. The process of claim 5 or Claim 6 wherein the alkaline earth metal salt is calcium chloride.

8. A process for preparing a poly(paraphenylene terephthalamide) paper comprising the steps of:
(a) combining, under agitation to yield a slurry:
(i) the fibrous gel prepared by the process of any one of Claims 1 to 7;
(ii) poly(paraphenylene terephthalamide) fiber; and
(iii) a liquid precipitating medium;
(b) pouring the slurry onto a screen to yield a sheet;
(c) washing the sheet;
(d) pressing the sheet; and
(e) drying the sheet.

9. The process of Claim 8 wherein the fibrous gel is diluted with an amide solvent before combining with the poly(paraphenylene terephthalamide) fiber and the liquid precipitating medium.

10. The process of Claim 9 wherein the amide solvent is N-methylpyrrolidone.

## Patentansprüche

1. Verfahren zur Herstellung einer faserigen Poly(paraphenylenterephthalmid)-Gelmasse, das die Stufen umfaßt Zusammenbringen von im wesentlichen stöchiometrischen Mengen von Terephthaloylchlorid zu einem reaktiven Kontakt mit Paraphenylendiamin unter Rühren in einer Lösung aus:
(a) wenigstens einem Amid-Lösungsmittel in einer Menge, die ausreicht, um eine Endkonzentration an Poly(Paraphenylenterephthalmid) im Bereich von 3 bis 7 Gew.-% des Lösungsmittels zu ergeben;
(b) wenigstens 1,5 mol eines Erdalkalimetallsalzes pro mol Paraphenylendiamin; und
(c) N-Methylpyrrolidon, das im Bereich von 1,0 bis 2,0 mol pro mol Paraphenylendiamin vorhanden ist, wobei das genannte Verfahren in Abwesenheit von Piperazin durchgeführt wird.

2. Verfahren nach Anspruch 1, bei dem das Molverhältnis von N-Methylpyrrolidon 1,5 zu 1,8 mol pro mol Paraphenylendiamin beträgt.

3. Verfahren nach Anspruch 1 oder Anspruch 2, bei dem das Amid-Lösungsmittel N-Methylpyrrolidon ist.

4. Verfahren nach Anspruch 1, 2 oder 3, bei dem das Erdalkalimetallsalz Calciumchlorid ist.

5. Verfahren zur Herstellung einer faserigen Poly(paraphenylenterephthalmid)-Gelmasse, das die Stufen umfaßt Zusammenbringen von im wesentlichen stöchiometrischen Mengen von Terephthaloylchlorid zu einem reaktiven Kontakt mit Paraphenylendiamin unter Rühren in einer Lösung aus:
(a) wenigstens einem Amid-Lösungsmittel in einer Menge, die ausreicht, um eine Endkonzentration an Poly(paraphenylenterephthalmid) im Bereich von etwa 3 bis etwa 7 Gew.-% des Lösungsmittels zu ergeben;
(b) wenigstens 1,5 mol eines Erdalkalimetallsalzes pro mol Paraphenylendiamin; und
(c) N-Methylpyrrolidon-Hydrochlorid, das im Bereich von 1,5 bis 4,0 mol pro mol Paraphenylendiamin vorhanden ist, wobei das genannte Verfahren in Abwesenheit von Piperazin durchgeführt wird.

6. Verfahren nach Anspruch 5, bei dem das Amid-Lösungsmittel N-Methylpyrrolidon ist.

7. Verfahren nach Anspruch 5 oder Anspruch 6, bei dem das Erdalkalimetallsalz Calciumchlorid ist.

8. Verfahren zur Herstellung eines Poly(paraphenylenterephthalamid)-Papiers, das die Stufen umfaßt:
(a) Zusammenbringen unter Rühren zur Herstellung einer Aufschlämmung:
(i) des faserigen Gels, das gemäß dem Verfahren nach einem der Ansprüche 1 bis 7 hergestellt worden ist ;
(ii) der Poly(paraphenylenterephthalamid)-Faser; und
(iii) eines flüssigen Ausfällmediums;
(b) Gießen der Aufschlämmung auf ein Sieb zur Herstellung eines Blattes;
(c) Waschen des Blattes;
(d) Pressen des Blattes; und
(e) Trocknen des Blattes.

9. Verfahren nach Anspruch 8, bei dem das faserige Gel mit einem Amid-Lösungsmittel verdünnt wird, bevor es mit der Poly(paraphenylenterephthalamid)-Faser und dem flüssigen Ausfällmedium zusammengebracht wird.

10. Verfahren nach Anspruch 9, bei dem das Amid-Lösungsmittel N-Methylpyrrolidon ist.

## Revendications

1. Un procédé de préparation d'une composition de gel fibreux à base de poly(paraphénylène téréphtalamide) comprenant le contact, en vue de leur réaction, de quantités sensiblement stoechiométriques de chlorure de téréphthaloyle avec du paraphénylène diamine, ladite réaction étant effectuée dans une solution, maintenue sous agitation, formée de:
(a) au moins un solvant à base d'amide dans une quantité suffisante pour conduire à une concentration finale de poly(paraphénylène téréphtalamide) de 3 à 7% en poids par rapport au poids du solvant;
(b) au moins 1,5 mole d'un sel de métal alcalino-terreux par mole de paraphénylènediamine; et
(c) de 1,0 à 2,0 moles de N-méthylpyrrolidine par mole de paraphénylènediamine;
ledit procédé étant mis en oeuvre en l'absence de pipérazine.

2. Le procédé selon la revendication 1, caractérisé en ce que le rapport molaire de N-méthylpyrrolidine est de 1,5 à 1,8 mole par mole de paraphénylènediamine.

3. Le procédé selon la revendication 1 ou 2, caractérisé en ce que le solvant à base d'amide est le N-méthylpyrrolidone.

4. Le procédé selon la revendication 1, 2 ou 3, caractérisé en ce que le sel de métal alcalino-terreux est le chlorure de calcium.

5. Le procédé de préparation d'une composition de gel fibreux à base de poly(paraphénylène téréphtalamide) comprenant le contact en vue de leur réaction de quantités sensiblement stoechiométriques de chlorure de téréphthaloyle avec du paraphénylène diamine, ladite réaction étant effectuée dans une solution, maintenue sous agitation, formée de:
(a) au moins un solvant à base d'amide dans une quantité suffisante pour conduire à une concentration finale de poly(paraphénylène téréphtalamide) d'environ 3 à environ 7% en poids par rapport au poids du solvant;
(b) au moins 1,5 mole d'un sel de métal alcalino-terreux par mole de paraphénylènediamine; et
(c) de 1,5 à 4,0 moles de chlorhydrate de N-méthylpyrroli- dine par mole de paraphénylènediamine;
ledit procédé étant mis en oeuvre en l'absence de pipérazine.

6. Le procédé selon la revendication 5, caractérisé en ce que le solvant à base d'amide est le N-méthylpyrrolidone.

7. Le procédé selon la revendication 5 ou 6, caractérisé en ce que le sel de métal alcalino-terreux est le chlorure de calcium.

8. Un procédé de préparation d'un papier constitué de poly(paraphénylène téréphthalamide) comprenant les étapes de:
(a) combinaison sous agitation pour obtenir une suspension de:
(i) un gel fibreux préparé par le procédé selon l'une quelconque des revendications 1 à 7;
(ii) des fibres de polyparaphénylène téréphtalamide; et
(iii) un milieu précipitant liquide;
(b) versement de la suspension sure un tamis pour obtenir une feuille;
(c) lavage de la feuille;
(d) pressage de la feuille; et
(e) séchage de la feuille.

9. Le procédé selon la revendication 8, caractérisé en ce que le gel fibreux est dilué avec un solvant à base d'amide avant combinaison avec la fibre de poly(paraphénylène téréphthalamide) et le milieu liquide de précipitation.

10. Le procédé selon la revendication 9, caractérisé en ce que le solvant à base d'amide est le N-méthylpyrrolidone.
